# EUROPÄISCHE PATENTSCHRIFT

(11) **EP 2 039 409 B1**
(45) Veröffentlichungstag und Bekanntmachung des Hinweises auf die Patenterteilung: **27.04.2011**
(21) Anmeldenummer: 07018660.6
(22) Anmeldetag: 22.09.2007
(51) Int. Cl.: B01D 3/12, B01D 3/22

(54) **Kurzwegverdampfer für siedende Flüssigkeiten mit separater Gaszuführung zum Kondensator**
Shortcut vaporiser for boiling fluids with separate gas entrance to the condenser
Evaporateur à court trajet avec entrée séparée de gaz au condensateur

(43) Veröffentlichungstag der Anmeldung: 25.03.2009
(73) Patentinhaber: Buss-SMS-Canzler GmbH, 35510 Butzbach (DE)
(72) Erfinder: Mix, Gunter, 52388 Nörvenich (DE)
(74) Vertreter: Schaad, Balass, Menzl & Partner AG

(56) Entgegenhaltungen:
- DE-A1- 10 024 418
- DE-A1- 19 723 874
- GB-A- 765 743

## Beschreibung

Die vorliegende Erfindung betrifft einen Kurzwegverdampfer gemäss dem Oberbegriff des Anspruchs 1 sowie ein Verfahren zur Auftrennung eines Stoffgemischs in einem Kurzwegverdampfer gemäss Anspruch 10.

Kurzwegverdampfer werden zum Verdampfen, Konzentrieren, Destillieren oder Entgasen temperaturempfindlicher, hochsiedender Stoffgemische eingesetzt.

Das Prinzip der Kurzwegverdampfung beruht darauf, dass ein dem Verdampfer zugeführtes Stoffgemisch an einer Verdampfungsfläche erhitzt wird und die dabei verdampfenden Bestandteile des Stoffgemischs an einer der Verdampfungsfläche gegenüberliegenden Kondensatorfläche kondensieren. Dabei wird der Abstand zwischen der Verdampfungsfläche und der Kondensatorfläche sehr gering gewählt, um Druckverluste über den Weg von der Verdampfungsfläche zur Kondensatorfläche zu minimieren.

GB 765,743 beschreibt eine Molekulardestillationsapparatur, bei dem eine drehbare Verdampferoberfläche von einem konischen oder glockenförmigen Verdampfer gebildet wird und am oberen Ende einer Vakuumkammer befestigt und angetrieben wird.

Kurzwegverdampfer können mit Drücken von 0,1 bis 0,001 mbar (abs) und entsprechend tiefen Temperaturen betrieben werden. Dies erlaubt es, extrem temperaturempfindliche Stoffgemische, wie etwa Vitamine und Aromastoffe enthaltende Stoffgemische, ohne thermische Schädigung der einzelnen Stoffe zu destillieren.

Bekannte Kurzwegverdampfer erlauben im Allgemeinen lediglich eine Auftrennung in einen höhersiedenden (oder schwersiedenden) Verdampfungsrückstand und ein tiefersiedendes (oder leichtsiedendes) Kondensat. Dabei stellt das Kondensat in der Regel wiederum ein Stoffgemisch dar.

Demgegenüber besteht oft das Bedürfnis, im Kondensat enthaltene Stoffe in hoher Reinheit zu erhalten. Dies erfordert in der Regel, dass das Kondensat weiteren Auftrennungsverfahrungen unterworfen wird, etwa einer weiteren Kurzverdampfung bei zusätzlich verminderten Drücken.

Aufgabe der vorliegenden Erfindung ist es somit, einen Kurzwegverdampfer zur Verfügung zu stellen, der es erlaubt, einzelne im zugeführten Stoffgemisch enthaltene Stoffe in hoher Reinheit zu erhalten.

Die Aufgabe der Erfindung wird gemäss dem in Anspruch 1 definierten Kurzwegverdampfer gelöst. Bevorzugte Ausführungsformen sind in den abhängigen Ansprüchen definiert.

Betriebsgemäss ist das Gehäuse des erfindungsgemässen Kurzwegverdampfers im Wesentlichen vertikal ausgerichtet. Ebenso sind die die Verdampfungsfläche umfassende innere Oberfläche des Gehäusemantels und der im Innenraum des Gehäuses angeordnete Kondensator vertikal ausgerichtet, sodass das Material auf der Verdampfungsfläche und das Kondensat auf der Kondensatorfläche aufgrund der Gravitation nach unten fliessen.

Gemäss der vorliegenden Erfindung weist der Kondensator übereinander angeordnete Kondensationszonen auf, an deren unterem Ende jeweils eine Sammelvorrichtung zur Sammlung des Kondensats der jeweiligen Kondensationszone angeordnet ist. Von jeder der Sammelvorrichtungen führt ein Kanal zur separaten Abführung des in der entsprechenden Kondensationszone gesammelten Kondensats weg. Somit kann für jede einzelne Kondensationszone das darin gesammelte Kondensat separat erhalten werden.

In der Regel ist der Kondensator aus kreisförmig um die Längsachse des Gehäuses angeordneten Kondensatorrohren gebildet. Alternativ dazu kann der Kondensator aus Kondensatorblechen, d.h. aus konzentrisch angeordneten, hohlzylinderförmigen Lamellenblechen mit Strömungshohlräumen, ausgebildet sein.

Da die Kondensation eines Bestandteils des Stoffgemisches weitgehend auf konstanter Höhe des Kondensators erfolgt, können mit dem erfindungsgemässen Kurzwegverdampfer selbst in einem komplexen Stoffgemisch enthaltene Bestandteile in hoher Reinheit erhalten werden. Durch Verstellen der Sammelvorrichtungen in ihrer Höhe auf dem Kondensator kann der erfindungsgemässe Kurzwegverdampfer auf verschiedene Stoffgemische eingestellt werden. Zwischen dem Kondensator und der jeweiligen Sammelvorrichtung kann optional ein Dichtungselement angeordnet sein.

Vorzugsweise ist die Sammelvorrichtung in Form einer Rinne ausgebildet. Dies erlaubt eine sehr stabile Bauweise des den Kondensator und die Sammelvorrichtungen umfassenden Kondensationseinsatzes. Durch die rinnenförmige Ausgestaltung der Sammelvorrichtung wird vermieden, dass das in der jeweiligen Kondensationszone gesammelte Kondensat in das Kondensat einer weiteren Kondensationszone gelangt.

Der von der Sammelvorrichtung wegführende Kanal ist in der Regel rohrförmig ausgebildet. In einer weiteren bevorzugten Ausführungsform verläuft das Rohr schräg nach unten, was ein kontrolliertes Fliessen des gesammelten Kondensats durch den von der Sammelvorrichtung wegführenden Kanal gewährleistet. Alternativ dazu ist auch denkbar, dass das Rohr im Wesentlichen vertikal nach unten verläuft.

Die gewünschten Kondensate können separat aus dem Kurzwegverdampfer ausgeführt werden. Dazu wird der von der jeweiligen Sammelvorrichtung wegführende Kanal mit einer das Gehäuse durchstossenden Durchführung verbunden. Gemäss einer bevorzugten Ausführungsform ist mindestens der von der obersten Sammelvorrichtung wegführende Kanal mit einer solchen Durchführung verbunden.

Weiter ist bevorzugt, dass mindestens zwei der Kanäle in eine Kammer münden, von der ein Sammelkanal zur Abführung der darin vereinten Kondensate aus dem Kurzwegverdampfer wegführt.

Gemäss einer besonders bevorzugten Ausführungsform ist zwischen der Materialzuführung und dem Kondensator eine Trennwand angeordnet, die den Innenraum in einen Vorverdampfungsraum, in den die Materialzuführung mündet, und einen den Kondensator umfassenden Verdampfungs-/Kondensatorraum trennt. Dabei ist der Trennwand ein erster Durchlass zur Leitung des im Vorverdampfungsraum enthaltenen flüssigen Anteils des zugeführten Materials zur Verdampfungsfläche im Verdampfungs-/Kondensatorraum zugeordnet. Die Trennwand weist zusätzlich mindestens einen weiteren Durchlass zur Leitung des im Vorverdampfungsraum enthaltenen gasförmigen Anteils des zugeführten Materials zum Kondensator auf.

Gemäss dieser bevorzugten Ausführungsform findet bereits im Vorverdampfungsraum durch die bei der Einführung des Materials auftretende Entspannungsverdampfung eine Auftrennung in tiefersiedende und höhersiedende Bestandteile statt. Diese werden über getrennte Durchlässe dem Kondensator bzw. der Verdampfungsfläche zugeführt, wodurch ein Mitriss von höhersiedenden Bestandteilen durch tiefersiedende Bestandteile im Verdampfungs-/Kondensatorraum stark vermindert wird, ohne dass eine Kühlung des zugeführten Materials notwendig wäre.

Gemäss dieser Ausführungsform kann eine sehr gute Auftrennung des dem Kurzwegverdampfer zugeführten Materials in energetisch vorteilhafter Weise erreicht werden.

Besonders bevorzugt ist in dieser Ausführungsform der mindestens eine weitere Durchlass in der Verlängerung des Kondensators angeordnet und die Trennwand um die Längsachse des Gehäuses drehbar. Dadurch wird erreicht, dass bei einer Rotation der Trennwand während des Betriebs des Kurzwegverdampfers der gasförmige Anteil auf dem gesamten Umfang des Kondensators gleichmässig verteilt wird. Alternativ dazu kann die Trennwand auch fest montiert sein.

Im Allgemeinen weist der Kurzwegverdampfer der vorliegenden Erfindung zudem separate Ausgänge zum Ausführen des nicht kondensierten gasförmigen Anteils bzw. des Verdampfungsrückstands aus dem Kurzwegverdampfer auf.

Weiter betrifft die Erfindung ein Verfahren zur Auftrennung eines Stoffgemischs im beschriebenen Kurzwegverdampfer gemäss Anspruch 10. Beispielhaft dafür sei etwa die Auftrennung von Monoglyceridgemischen erwähnt, die vielfach noch tiefersiedende Bestandteile wie Glycerin und tiefersiedende Fettsäuren umfassen. Diese tiefersiedenden Bestandteile werden in einer oberen Kondensationszone mittels der dieser zugeordneten Sammelvorrichtung gesammelt. Die höhersiedenden Bestandteile kondensieren in einer weiter unten angeordneten Kondensationszone, wo sie mit einer entsprechenden Sammelvorrichtung gesammelt werden.

Erfindungsgemäss können die beiden Kondensate mittels mindestens eines von der jeweiligen Sammelvorrichtung wegführenden Kanals separat aus dem Kurzwegverdampfer ausgeführt werden.

Die Erfindung wird weiter anhand der angefügten Figuren erläutert. Es zeigen rein schematisch:
- Fig. 1: einen axialen Längsschnitt eines Kurzwegverdampfers des Standes der Technik mit einer daran angeordneten Rotorantriebseinheit;
- Fig. 2: einen axialen Längsschnitt eines erfindungsgemässen Kurzwegverdampfers, wobei der Gehäusemantel und der Kondensator sowie die dem Kondensator zugeordneten Elemente nur teilweise dargestellt sind;
- Fig. 3: vergrössert eine Hälfte eines oberen Segments des in Fig. 2 gezeigten Kurzwegverdampfers;
- Fig. 4: in Ansicht einen Kondensationseinsatz des in den Fig. 2 und 3 gezeigten Kurzwegverdampfers, wobei der Kondensationseinsatz an der unteren Gehäusewand des Kurzwegverdampfers angeordnet ist;

- Fig. 5: einen axialen Längsschnitt eines weiteren erfindungsgemässen Kurzwegverdampfers umfassend ein Kondensatorblech; und
- Fig. 6: eine Ansicht des äusseren Lamellenblechs und der diesem zugeordneten Komponenten des in Fig. 5 gezeigten Kurzwegverdampfers.

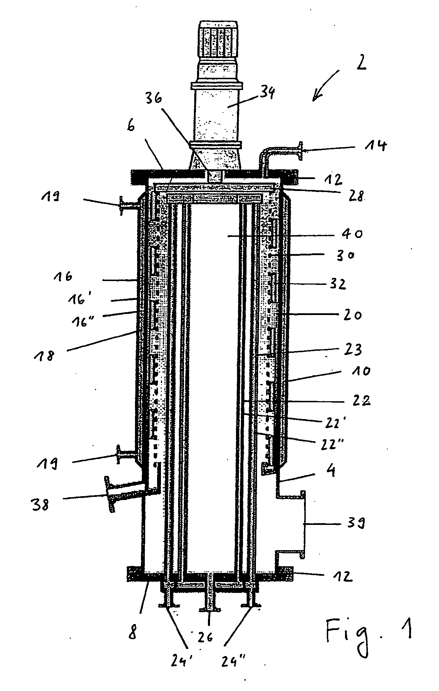

Der in Fig. 1 gezeigte Kurzwegverdampfer 2 des Standes der Technik umfasst ein Gehäuse 4 mit einer oberen Gehäusewand 6, einer unteren Gehäusewand 8 und einem kreiszylindrischen Gehäusemantel 10. Die obere und die untere Gehäusewand 6 bzw. 8 sind mit dem oberen bzw. dem unteren Ende des Gehäusemantels 10 über Flansche 12 verbunden. Durch die obere Gehäusewand 8 führt eine Materialzuführung 14 in Form eines Rohrstutzens in den vom Gehäuse 4 begrenzten Innenraum 40 des Kurzwegverdampfers.

Der Gehäusemantel 10 ist in den oberen zwei Dritteln des Gehäuses 4 in Form einer Doppelwand 16 ausgebildet. Zu dem durch die beiden Wände 16', 16" der Doppelwand 16 umschlossenen Zwischenraum 18 führt am unteren und am oberen Ende der Doppelwand 16 je eine Leitung 19 durch die äussere Wand 16'. Mittels dieser Leitung 19 kann ein Heizmittel in den Zwischenraum 18 eingeführt werden. Die radial innere Oberfläche des Gehäusemantels 10 hat im Bereich der so beheizbaren Doppelwand 16 die Funktion einer Verdampfungsfläche 20 für das durch die Materialzuführung 14 in den Kurzwegverdampfer 2 eingebrachte Stoffgemisch.

Im Inneren des Gehäuses sind konzentrisch zwei Reihen von miteinander strömungsverbundenen Kondensatorrohren 22', 22" angeordnet, die in ihrer Gesamtheit den Kondensator 22 bilden. Die Kondensatorrohre sind mit Leitungen 24', 24" zum Zuführen und/oder Abführen eines Kühlmittels verbunden.

Die auf der Verdampfungsfläche 20 verdampfenden Bestandteile des Stoffgemischs kondensieren an der durch die Oberfläche der Kondensatorrohre 22', 22" gebildeten Kondensatorfläche 23, worauf das dabei entstehende Kondensat aufgrund der Gravitation entlang des Kondensators 22 nach unten fliesst. Das sich am Boden des Kurzwegverdampfers 2 ansammelnde Kondensat wird über eine durch die untere Gehäusewand 8 führende Leitung 26 ausgeführt.

Der Kurzwegverdampfer 2 weist oberhalb des Kondensators 22 eine im Wesentlichen scheibenförmige, um die Längsachse des Gehäuses 4 drehbare und während des Betriebs rotierende Rotorplatte 28 auf, an deren peripherem Randbereich eine Aufhängung 30 angeordnet ist mit daran umlaufend angeordneten Verteilungsmitteln 32 zur Verteilung des zugeführten Materials auf der Verdampfungsfläche 20. Diese Verteilungsmittel 32 können etwa in Form von Wischblättern vorliegen. Sie sind in Umfangsrichtung in regelmässigen Abständen und in axialer Richtung derart versetzt zueinander angeordnet, dass sie auf einer (oder mehreren) um die Längsachse herum verlaufenden Spirale(n) liegen. Die Rotorplatte 28 wird durch eine Rotorantriebseinheit 34 über eine die obere Gehäusewand 6 durchgreifende und mit der Rotorplatte 28 verbundene Rotorwelle 36 angetrieben. Somit rotiert während des Betriebs auch die Aufhängung 30 mit den daran angeordneten Verteilungsmitteln 32, was gewährleistet, dass das zugeführte Material auf der Verdampfungsfläche 20 verteilt wird. Im unteren Drittel des Gehäusemantels 10, d.h. unterhalb der Doppelwand 16 und unterhalb der Aufhängung 30 ist ein Ausgang 38 zum Ausführen des Verdampfungsrückstands angeordnet. Dieser verläuft schräg nach unten, um das Ausführen des Verdampfungsrückstandes zu begünstigen.

Zudem ist auf der dem Ausgang 38 für den Verdampfungsrückstand gegenüberliegenden Seite des Gehäuses 4 ein Ausgang 39 zum Ausführen der nicht kondensierten gasförmigen Bestandteile des Stoffgemischs angeordnet.

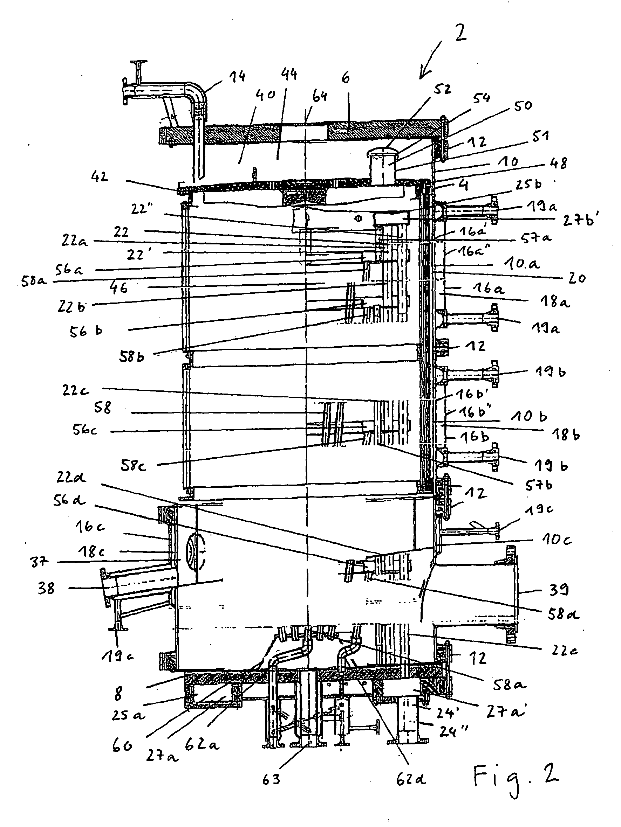

Figur 2 zeigt einen erfindungsgemässen Kurzwegverdampfer 2 mit einer oberen Gehäusewand 6, einer unteren Gehäusewand 8 und einem kreiszylinderförmigen Gehäusemantel 10, der nur teilweise gezeigt ist. In der gezeigten Ausführungsform umfasst der Gehäusemantel 10 drei separate Gehäusemantelsegmente 10a, 10b, 10c.

Am oberen und am unteren Ende der Gehäusemantelsegmente 10a, 10b, 10c ist jeweils ein Flansch 12 zur Befestigung der Gehäusemantelsegmente miteinander bzw. zur Befestigung der oberen Gehäusewand 6 bzw. der unteren Gehäusewand 8 angeordnet.

Die oberen Gehäusemantelsegmente 10a, 10b weisen je einen Bereich auf, der in Form einer Doppelwand 16a, 16b ausgebildet ist. Zu dem durch die beiden Wände 16a', 16a" bzw. 16b', 16b' der Doppelwand 16a bzw. 16b umschlossenen Zwischenraum 18a, 18b führen Leitungen 19a, 19b, mittels welcher ein Heizmittel in den Zwischenraum 18a, 18b ein-und/oder ausgeführt werden kann.

An der inneren Oberfläche des untersten Gehäusemantelsegments 10c ist ein ringförmiger Sammelkanal 37 zur Sammlung des Verdampfungsrückstands angeordnet. Der Sammelkanal 37 ist gegen oben offen und weist einen in einer schiefen Ebene liegenden Boden auf, von dessen untersten Punkt ein schräg nach unten verlaufender Ausgang 38 zum Ausführen des Verdampfungsrückstands wegführt. Auf der dem Ausgang 38 gegenüberliegenden Seite ist ein Ausgang 39 zum Ausführen der nicht kondensierten gasförmigen Bestandteile des Stoffgemisches angeordnet. In seinem oberen Bereich ist das unterste Gehäusemantelsegment 10c in Form einer Doppelwand 16c ausgebildet, der Leitungen 19c zum Ein- und/oder Ausführen eines Heizmittels in den von der Doppelwand 16c umschlossenen Zwischenraum 18c zugeordnet sind. In der gezeigten Ausführungsform ist auch der Ausgang 38 doppelwandig ausgebildet.

Das Vorliegen getrennter, von der jeweiligen Doppelwand umgrenzter Zwischenräume erlaubt es, die Gehäusemantelsegmente separat zu beheizen und somit Heizzonen mit unterschiedlicher Temperatur zu erhalten.

Durch die obere Gehäusewand 6 führt eine rohrartige Materialzuführung 14 in den vom Gehäuse 4 begrenzten Innenraum 40 des Kurzwegverdampfers 2. Im Innenraum 40 weist der Kurzwegverdampfer 2 einen Kondensator 22 in Form von in zwei zur Längsachse des Gehäuses 4 konzentrischen Reihen angeordneten Kondensatorrohren 22' 22" auf. Der Kondensator 22 ist von der unteren Gehäusewand 8 getragen.

Die Kondensatorrohre 22', 22" münden an ihrem oberen und an ihrem unterem Ende in je einen ringförmigen Kühlmittelbehälter 25a, 25b. Die Kühlmittelbehälter 25a, 25b sind in einzelne, in Umfangsrichtung hintereinander angeordnete Kammern 27a bzw. 27b unterteilt. Dabei führen von einer ersten Kammer 27a' des unteren Kühlmittelbehälters 25a fünf Kondensatorrohre 22', 22" zu einer ersten Kammer 27b' des oberen Kühlmittelbehälters 25b. Von dieser ersten Kammer 27b' des oberen Kühlmittelbehälters 25b führen weitere drei Kondensatorrohre 22', 22" zu einer der ersten Kammer 27a' des unteren Kühlmittelbehälters 25a benachbarten zweiten Kammer 27a" (nicht gezeigt). Von dieser zweiten Kammer 27a" des unteren Kühlmittelbehälters 25b führen wiederum fünf Kondensatorrohre 22', 22" in eine zweite, der ersten Kammer 27b' des oberen Kühlmittelbehälters 25b benachbarte zweite Kammer 27b" u.s.w. Die erste Kammer 27a' des unteren Kühlmittelbehälters 25a ist mit einer Leitung 24' zur Zuführung des Kühlmittels verbunden, während von der in Strömungsrichtung letzten Kammer, die der ersten Kammer 27a' benachbart ist, eine Leitung 24" zur Abführung des Kühlmittels wegführt.

Dadurch, dass die Kondensatorrohre 22', 22", durch die das Kühlmittel nach unten strömt, bei gleichem Strömungsquerschnitt in geringeren Anzahl vorliegen, als die Kondensatorrohre 22', 22", durch die das Kühlmittel nach oben strömt, ist die Strömungsgeschwindigkeit beim Herunterfliessen erhöht. Somit wird allfällige beim Aufwärtsströmen des Kühlmittels mitgerissene Luft beim Herunterfliessen wieder mitgenommen. Schliesslich wird das Kühlmittel zusammen mit allfällig mitgerissener Luft über die Leitung 24" aus der in Strömungsrichtung letzten Kammer 27a des unteren Kühlmittelbehälters 25a weggeführt.

Zwischen dem Kondensator 22 und der Materialzuführung 14 ist eine scheibenförmige Trennwand 42 angebracht, die den Innenraum 40 des Kurzwegverdampfers 2 in einen obenliegenden Vorverdampfungsraum 44 und einen untenliegenden Verdampfungs-/Kondensatorraum 46 trennt. Die Materialzuführung 14 endet in kurzem Abstand von der Trennwand 42, sodass das eingeführte Material auf die Trennwand 42 geführt wird.

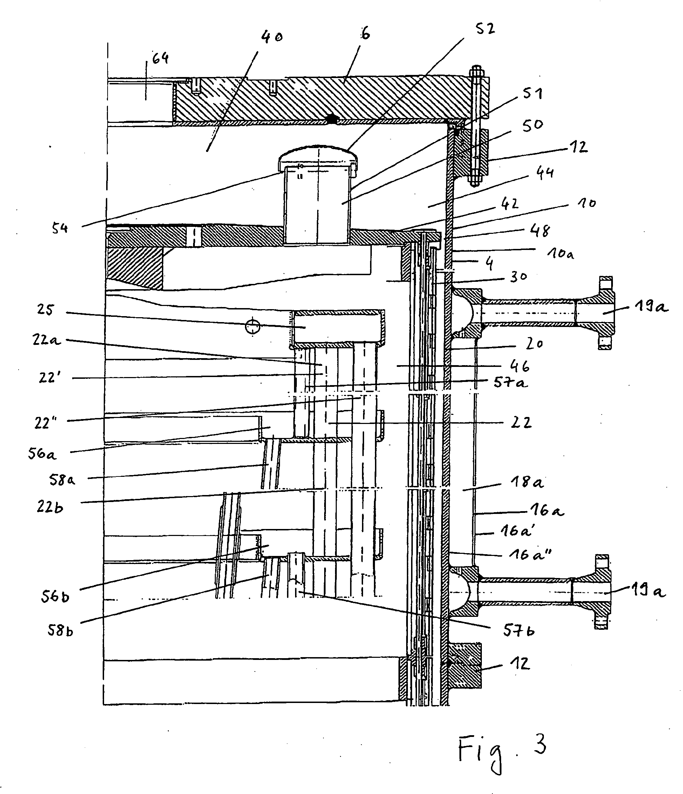

Wie insbesondere auch aus Fig. 3 ersichtlich, ist der Durchmesser der Trennwand 42 etwas geringer als der innere Durchmesser des Gehäusemantels 10, so dass zwischen dem peripheren Rand der Trennwand 42 und der inneren Oberfläche des Gehäusemantels 10 ein einen der Trennwand 42 zugeordneten ersten Durchlass 48 bildender Spalt vorliegt. Die im Vorverdampfungsraum 44 enthaltenen flüssigen Anteile gelangen über den ersten Durchlass 48 in den Verdampfungs-/Kondensatorraum 46 an die Verdampfungsfläche 20.

Die Trennwand 42 weist mindestens einen zweiten Durchlass 50 auf, der in einem radialem Abstand von der Längsachse des Gehäuses 4 angeordnet ist, welcher im Wesentlichen dem radialen Abstand des Kondensators 22 von der Längsachse des Gehäuses entspricht. Somit ist der zweite Durchlass 50 der Trennwand 42 in der Verlängerung des Kondensators 22 angeordnet.

Der zweite Durchlass 50 umfasst einen in die Trennwand 42 eingesetzten Rohrstutzen 51, dessen oberes freies Ende im Vorverdampfungsraum 44 derart von der Trennwand 42 beabstandet ist, dass es über dem maximalen Füllgrad der Flüssigkeit im Vorverdampfungsraum 44 liegt. Der Rohrstutzen 51 weist an seinem freien Ende eine Abdeckhaube 52 auf. Zwischen Rohrstutzen 51 und Abdeckhaube 52 ist ein Durchtrittsspalt 54 ausgebildet, der die Verbindung zwischen dem Vorverdampfungsraum 44 und dem Verdampfungs-/Kondensatorraum 46 sicherstellt.

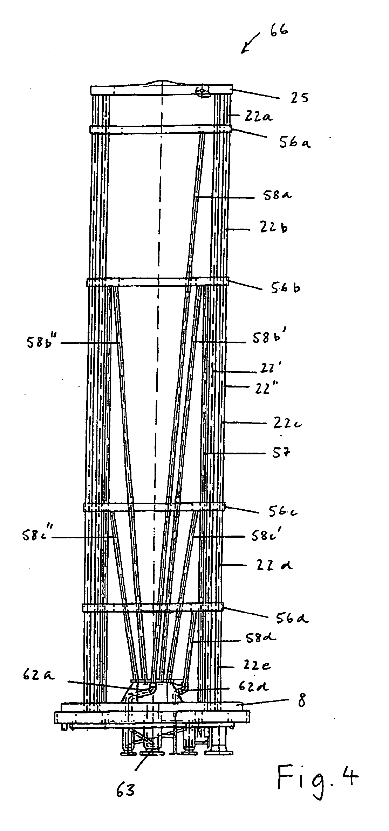

Wie aus Fig. 2 und insbesondere aus Fig. 4 weiter ersichtlich ist, weist der Kondensator 22 fünf übereinander angeordnete Kondensationszonen 22a, 22b, 22c, 22d, 22e auf. Am unterem Ende der oberen vier Kondensationszonen 22a, 22b, 22c, 22d ist jeweils eine Sammelvorrichtung 56a, 56b, 56c, 56d in Form einer ringförmigen Rinne angeordnet. Die Sammelvorrichtung der untersten Kondensationszone 22e wird von der unteren Gehäusewand 8 gebildet. Zwischen der obersten Sammelvorrichtung 56a und dem Kühlmittelbehälter 25 ist ein Stützelement 57a angeordnet. Die übrigen Sammelvorrichtungen 56b, 56c, 56d werden mittels eines weiteren mit der unteren Gehäusewand 8 verbundenen Stützelements 57b gestützt.

Von den rinnenförmigen Sammelvorrichtungen 56a, 56b, 56c, 56d führen rohrförmige, schräg nach unten verlaufende Kanäle 58a, 58b, 58c, 58d weg. Dabei durchstossen die Kanäle 58a, 58b, 58c die unterhalb der jeweiligen Sammelvorrichtung 56a, 56b bzw. 56c angeordnete(n) rinnenförmige(n) Sammelvorrichtung(en) 56b, 56c bzw. 56d, wobei zwischen dem durchstossenden Kanal und der jeweiligen Sammelvorrichtung ein dichter Abschluss ausgebildet ist. Der die Sammelvorrichtung durchstossende Bereich des jeweiligen Kanals 58a, 58b, 58c ist thermisch isoliert.

Zudem kann zwischen den Sammelvorrichtungen 56a, 56b, 56c, 56d und den Kondensatorrohren 22', 22" eine Dichtung vorgesehen sein. Diese ist aber nicht zwingend notwendig.

Wie insbesondere aus Fig. 3 ersichtlich ist, weist die obere Gehäusewand 6 eine Durchtrittsöffnung 64 auf. In der betriebsgemässen Anordnung führt durch die Durchtrittsöffnung 64 dichtend eine mit einer Antriebseinheit ausserhalb des Kurzwegverdampfers 2 verbundene, z.B. im Zusammenhang mit dem Stand der Technik in Fig. 1 gezeigte Rotorwelle 36, welche die Rotation auf die Trennwand 42 überträgt. Somit rotiert die Trennwand 42 mit der in diesem angeordneten zweiten Durchlass 50 während des Betriebs des Kurzwegverdampfers 2, was gewährleistet, dass die aus dem Vorverdampfungsraum 44 in den Verdampfungs-/Kondensatorraum 46 geführten gasförmigen Anteile des zugeführten Stoffgemischs über den gesamten Umfang des Kondensators 22 verteilt werden. Zudem werden die im Vorverdampfungsraum 44 enthaltenen flüssigen Anteile durch die bei der Rotation der Trennwand 42 wirkenden Zentrifugalkräfte zum ersten Durchlass 48 und somit an die innere Oberfläche des Gehäusemantels 10 geführt.

In ihrem Randbereich weist die Trennwand 42 eine nach unten in den Verdampfungs-/Kondensatorraum 46 vorstehende Aufhängung 30 auf. An dieser sind Verteilungsmittel angeordnet zur Verteilung des flüssigen Anteils des Stoffgemischs auf der inneren Oberfläche des Gehäusemantels 10 im Verdampfungs-/Kondensatorraum 46 und somit auf der Verdampfungsfläche 20. Die Verteilungsmittel sind gleich oder ähnlich zu den im Zusammenhang mit dem Stand der Technik in Fig. 1 gezeigten Verteilungsmitteln 32 ausgebildet. Die Aufhängung 30 mit den Verteilungsmitteln 32 ist dabei in radialer Richtung möglichst schlank ausgebildet, damit der Kondensator 22 möglichst nahe an die innere Oberfläche des Gehäusemantels 10 gebaut werden kann.

Alternativ zur gezeigten Ausführungsform ist auch denkbar, die Trennwand stationär auszubilden. Dabei ist auch denkbar, die Trennwand derart auszubilden, dass sie mit ihrem peripheren Rand an der inneren Oberfläche des Gehäusemantels anliegt oder mit dieser verbunden ist und der erste Durchlass in der Trennwand selber ausgebildet ist.

Der in Fig. 4 gezeigte Kondensationseinsatz 66 umfasst die den Kondensator 22 bildenden, in zwei konzentrischen Reihen angeordneten Kondensatorrohre 22', 22", die von der unteren Gehäusewand 8 getragen werden und an ihrem oberen Ende über den ringförmige Kühlmittelbehälter 25 miteinander verbunden sind. Der Kondensator weist die weiter oben bereits genannten fünf Kondensationszonen 22a, 22b, 22c, 22d, 22e auf, wobei am unteren Ende der oberen vier Kondensationszonen 22a, 22b, 22c, 22d jeweils die Sammelvorrichtung 56a, 56b, 56c bzw. 56d in Form einer ringförmigen Rinne angeordnet ist. Die Sammelvorrichtung der untersten Kondensationszone 22e wird von der unteren Gehäusewand 8 gebildet. Die Sammelvorrichtung 56b, 56c und 56d werden im gezeigten Kondensationseinsatz 66 von einem mit der unteren Gehäusewand 8 verbundenen Stützelement 57 gestützt. Das in den Fig. 2 und 3 gezeigte, zwischen der obersten Sammelvorrichtung 56a und dem Kühlmittelbehälter 25 angeordnete Stützelement 57a ist in Fig. 4 nicht gezeigt.

Wie aus Fig. 4 ersichtlich ist, führen von den obersten vier Sammelvorrichtungen 56a, 56b, 56c, 56d insgesamt sechs Kanäle 58a, 58b', 58b", 58c', 58c", 58d weg, wobei von der obersten Sammelvorrichtung 56a und von der viertobersten (=zweituntersten) Sammelvorrichtung 56d jeweils ein Kanal 58a bzw. 58d wegführt und von der zweitobersten Sammelvorrichtung 56b und von der drittobersten Sammelvorrichtung 56c jeweils zwei Kanäle 58b', 58b" bzw. 58c', 58c" wegführen. Die Kanäle 58a und 58d werden mit jeweils einer die untere Gehäusewand 8 durchstossenden Durchführung 62a, 62d zur separaten Ausführung des entsprechenden Kondensats der Kondensationszonen 22a und 22d aus dem Kurzwegverdampfer 2 verbunden. Die übrigen Kondensate der Kondensationszonen 22b, 22c werden mittels der Kanäle 58b', 58b", 58c', 58c" in einer an der unteren Gehäusewand 8 zentral angeordneten, gegenüber dem Verdampfungs-/Kondensatorraum 46 nicht abgedichteten Kammer 60 mit dem Kondensat der Kondensationszone 22e vereint und aus der Kammer 60 über den Sammelkanal 63 ausgeführt.

Je nach Länge der Kondensationszone und der Menge des in dieser anfallenden Kondensats kann die Zahl der Kanäle, die von der jeweiligen Sammelvorrichtung wegführen, variiert werden. Zudem kann mittels einfacher Umbauten die Wahl der separat auszuführenden Kondensate variiert werden. Selbstverständlich können auch alle Kondensate der verschiedenen Kondensationszone separat ausgeführt werden.

Die rinnenförmigen Sammelvorrichtungen 56a, 56b, 56c, 56d können in ihrer Höhe auf dem Kondensator 22 auch verstellbar ausgebildet sein, was es erlaubt, den Kurzwegverdampfer auf verschiedene Stoffgemische einzustellen. In einer solchen Ausführungsform sind die Kanäle in ihrer Länge entsprechend verstellbar, etwa als teleskopartige Röhren, oder flexibel ausgestaltet.

Weiter ist denkbar, dass der Kondensator mehr oder weniger Kondensationszonen (und entsprechend mehr oder weniger Sammelvorrichtungen) aufweist, als in den Figuren gezeigt sind.

Zur Auftrennung eines Stoffgemisches im erfindungsgemässen Kurzwegverdampfer wird dieses über die Materialzuführung 14 in den Vorverdampfungsraum 44 des Kurzwegverdampfers 2 eingebracht. Dabei findet in der Regel aufgrund der Druckabnahme eine Entspannungsverdampfung statt. Die dabei freigesetzten gasförmigen Anteile werden vom Vorverdampfungsraum 44 über den in der rotierenden Trennwand 42 angeordneten zweiten Durchlass 50 zum Kondensator 22 im Verdampfungs-/Kondensatorraum 46 geleitet und auf dem gesamten Umfang des Kondensators 22 gleichmässig verteilt.

Der im Vorverdampfungsraum 44 enthaltene flüssige Anteil wird durch die bei der Rotation der Trennwand 42 wirkenden Zentrifugalkräfte zu dem den ersten Durchlass 48 bildenden Spalt und somit an die innere Oberfläche des Gehäusemantels 10 geführt, wo er aufgrund der Gravitation nach unten fliesst. Dabei wird der flüssige Anteil mittels der an der rotierenden Trennwand 42 angebrachten Aufhängung 30 mit den daran angeordneten Verteilungsmitteln 32 auf der inneren Oberfläche des Gehäusemantels 10 im Verdampfungs-/Kondensatorraum 46 und somit auf der Verdampfungsfläche 20 gleichmässig verteilt.

Die an der Kondensatorfläche 23 anfallenden Kondensate der einzelnen Kondensationszonen 22a, 22b, 22c, 22d fliessen aufgrund des Gravitation nach unten und werden für jede Kondensationszone separat in den diesen zugeordneten Sammelvorrichtungen 56 gesammelt und über die entsprechenden Kanäle 58 weggeführt. Die weggeführten Kondensate werden separat oder miteinander vereint aus dem Kurzwegverdampfer ausgeführt.

Der Verdampfungsrückstand und der nicht kondensierte gasförmige Anteil des Stoffgemischs werden separat über die Ausgänge 38 bzw. 39 aus dem Kurzwegverdampfer ausgeführt.

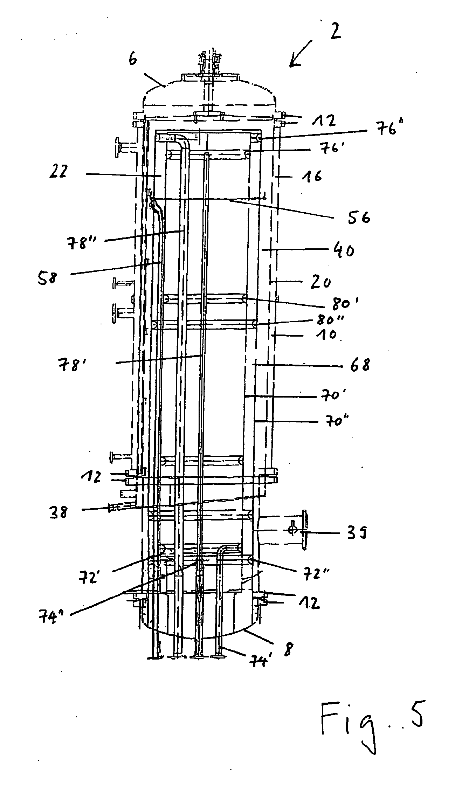

Als Alternative zu den in den Figuren 1 bis 4 gezeigten Kondensatorrohren 22', 22" sind auch sogenannte Kondensatorbleche 68 denkbar, wie sie beispielsweise in Fig. 5 gezeigt sind. Dabei handelt es sich um zwei zylinderförmige, konzentrisch angeordnete Lamellenbleche 70', 70" mit Strömungshohlräumen. Im seinem oberen und unteren Bereich weist das innere Lamellenblech 70' auf der der Längsachse zugewandten Seite umlaufend Öffnungen zu den Strömungshohlräumen auf.

Durch die im unteren Bereich angeordneten Öffnungen wird über einen als ringförmiges Halbrohr ausgestalteten unteren Verteilerring 72', in den seinerseits eine Kühlmittelzuleitung 74' mündet, Kühlmittel in die Strömungshohlräume geleitet. Das Kühlmittel strömt durch die Strömungshohlräume nach oben, wo es durch die im oberen Bereich angeordneten Öffnungen aus dem Lamellenblech 70' austritt und in einem oberen Sammelring 76' gesammelt wird, von dem ein Kühlmittelrückfluss 78' wegführt. Der Verteilerring 72' und der Sammelring 76' sind gleich ausgebildet.

In Analogie zum inneren Lamellenblech 70' sind auch im äusseren Lamellenblech 70" im unteren Bereich Öffnungen vorgesehen, durch die über einen weiteren mit einer Kühlmittelzuleitung 74" verbundenen unteren Verteilerring 72" Kühlmittel in die Strömungshohlräume eingeführt wird, welches schliesslich in einem weiteren oberen Sammelring 76" gesammelt und über einen weiteren Kühlmittelrückfluss 78" weggeführt wird.

Aus Gründen der Stabilität sind an den Lamellenblechen 70', 70" zudem ringförmige Stützelemente 80', 80" angeordnet.

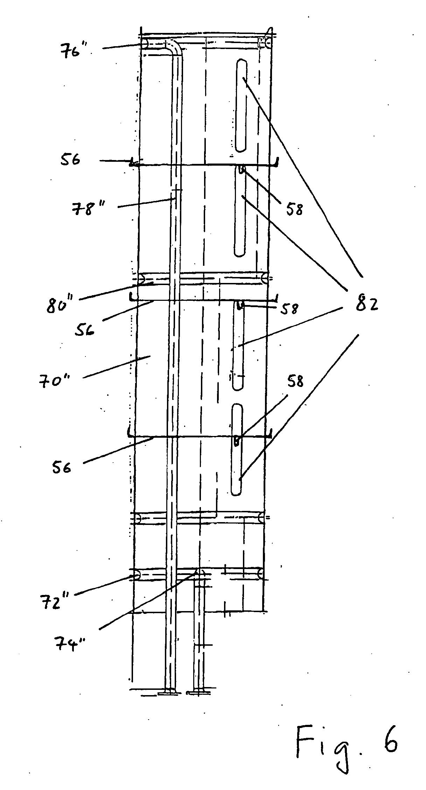

Wie aus Fig. 6 ersichtlich ist, weist das äussere Lamellenblech 70" in der Regel zudem spaltartige Durchlässe 82 auf. Dadurch wird gewährleistet, dass die gasförmige Komponente auch mit dem inneren Lamellenblech 70' in Kontakt kommt. In der in Fig. 6 gezeigten Ausführungsform werden zudem die von den Sammelvorrichtungen 56 wegführenden Kanäle 58 durch die Durchlässe 82 geführt.

## Patentansprüche

1. Kurzwegverdampfer umfassend ein einen Innenraum (40) umschliessendes Gehäuse (4) mit einer oberen Gehäusewand (6), einer unteren Gehäusewand (8) und einem mindestens teilweise beheizbaren Gehäusemantel (10), dessen innere Oberfläche oder ein Teil davon eine Verdampfungsfläche (20) bildet, eine in den Innenraum (40) führende Materialzuführung (14) und einen im Innenraum (40) angeordneten Kondensator (22), **dadurch gekennzeichnet, dass** der Kondensator (22) übereinander angeordnete Kondensationszonen (22a, 22b, 22c, 22d) aufweist, an deren unterem Ende jeweils eine Sammelvorrichtung (56) zur Sammlung des Kondensats der jeweiligen Kondensationszone angeordnet ist, die Sammelvorrichtungen (56) in ihrer Höhe auf dem Kondensator (22) verstellbar sind und von jeder der Sammelvorrichtungen (56) ein Kanal (58) zur separaten Abführung des in der betreffenden Kondensationszone gesammelten Kondensats wegführt.

2. Kurwegverdampfer nach Anspruch 1, **dadurch gekennzeichnet, dass** mindestens eine der Sammelvorrichtungen (56) in Form einer Rinne ausgebildet ist.

3. Kurzverdampfer nach Anspruch 1 oder 2, **dadurch gekennzeichnet, dass** mindestens einer der Kanäle (58) als vorzugsweise schräg nach unten verlaufendes Rohr ausgebildet ist.

4. Kurzwegverdampfer nach einem der vorhergehenden Ansprüche, **dadurch gekennzeichnet, dass** mindestens einer der Kanäle (58) mit einer das Gehäuse (4) durchstossenden Durchführung (62) zur separaten Ausführung des betreffenden Kondensats aus dem Kurzwegverdampfer (2) verbunden ist.

5. Kurzwegverdampfer nach Anspruch 4, **dadurch gekennzeichnet, dass** der mindestens eine mit der Durchführung (62) verbundene Kanal von der obersten Sammelvorrichtung (56a) wegführt.

6. Kurzwegverdampfer nach einem der vorhergehenden Ansprüche, **dadurch gekennzeichnet, dass** mindestens zwei der Kanäle (58) in eine Kammer (60) münden, von der ein Sammelkanal (63) zur Abführung der darin vereinten Kondensate aus dem Kurzwegverdampfer (2) wegführt.

7. Kurzwegverdampfer nach einem der vorhergehenden Ansprüche, **dadurch gekennzeichnet, dass** der Kondensator (22) aus kreisförmig um die Längsachse des Gehäuses (4) angeordneten Kondensatorrohren (22', 22") gebildet ist.

8. Kurzwegverdampfer nach einem der vorhergehenden Ansprüche, **dadurch gekennzeichnet, dass** zwischen der Materialzuführung (14) und dem Kondensator (22) eine Trennwand (42) angeordnet ist, die den Innenraum (40) in einen Vorverdampfungsraum (44), in den die Materialzuführung (14) mündet, und einen den Kondensator (22) umfassenden Verdampfungs-/Kondensatorraum (46) trennt, und der Trennwand (42) ein erster Durchlass (48) zur Leitung des im Vorverdampfungsraum (44) enthaltenen flüssigen Anteils zur inneren Oberfläche des Gehäusemantels (10) im Verdampfungs-/Kondensatorraum (46) zwecks Verdampfung zugeordnet ist und die Trennwand (42) mindestens einen weiteren Durchlass (50) zur Leitung des im Vorverdampfungsraum (44) enthaltenen gasförmigen Anteils zum Kondensator (22) aufweist.

9. Kurzwegverdampfer nach Anspruch 8, **dadurch gekennzeichnet, dass** der mindestens eine weitere Durchlass (50) in der Verlängerung des Kondensators (22) angeordnet ist und die Trennwand (42) um die Längsachse des Gehäuses (4) drehbar ist.

10. Verfahren zur Auftrennung eines Stoffgemischs in einem Kurzwegverdampfer (2) nach einem der vorhergehenden Ansprüche, umfassend die Schritte, dass
a) das Stoffgemisch über die Materialzuführung (14) in den Kurzwegverdampfer (2) eingeführt wird,
b) die Kondensate der einzelnen Kondensationszonen (22a, 22b, 22c, 22d) in der jeweiligen Sammelvorrichtung (56) gesammelt und über den jeweiligen Kanal (58) weggeführt werden, und die weggeführten Kondensate separat oder mit anderen Kondensaten vereint aus dem Kurzwegverdampfer (2) ausgeführt werden und
c) der nicht kondensierte gasförmige Anteil des Stoffgemischs sowie der Verdampfungsrückstand des Stoffgemischs separat aus dem Kurzwegverdampfer (2) ausgeführt werden.

## Claims

1. Short path evaporator, comprising a housing (4) enclosing an inner space (40), the housing having an upper housing wall (6), a lower housing wall (8) and an at least partially heatable housing jacket (10), of which the inner surface or part thereof forms an evaporation surface (20), a material feed (14) leading into the inner space (40), and a condenser (22) arranged in the inner space (40), **characterized in that** the condenser (22) has condensation zones (22a, 22b, 22c, 22d) which are arranged one above the other and at the lower end of which is arranged in each case a collecting device (56) for collecting the condensate of the respective condensation zone, the height of the collecting devices (56) on the condenser (22) is adjustable, and a duct (58) for the separate discharge of the condensate collected in the respective condensation zone leads away from each of the collecting devices (56).

2. Short path evaporator according to Claim 1, **characterized in that** at least one of the collecting devices (56) is designed in the form of a gutter.

3. Short path evaporator according to Claim 1 or 2, **characterized in that** at least one of the ducts (58) is designed as a tube preferably running obliquely downwards.

4. Short path evaporator according to one of the preceding claims, **characterized in that** at least one of the ducts (58) is connected to a lead-through (62), piercing the housing (4), for the separate discharge of the respective condensate out of the short path evaporator (2).

5. Short path evaporator according to Claim 4, **characterized in that** the at least one duct connected to the lead-through (62) leads away from the uppermost collecting device (56a).

6. Short path evaporator according to one of the preceding claims, **characterized in that** at least two of the ducts (58) issue into a chamber (60), from which a collecting duct (63) for the discharge of the condensates combined therein out of the short path evaporator (2) leads away.

7. Short path evaporator according to one of the preceding claims, **characterized in that** the condenser (22) is formed from condenser tubes (22', 22" ) arranged circularly about the longitudinal axis of the housing (4).

8. Short path evaporator according to one of the preceding claims, **characterized in that**, between the material feed (14) and the condenser (22), a partition (42) is arranged, which separates the inner space (40) into a pre-evaporation space (44), into which the material feed (14) issues, and an evaporation/condenser space (46) comprising the condenser (22), and the partition (42) is assigned a first passage (48) for conducting the liquid fraction contained in the pre-evaporation space (44) to the inner surface of the housing jacket (10) in the evaporation/condenser space (46) for the purpose of evaporation, and the partition (42) has at least one further passage (50) for conducting the gaseous fraction contained in the pre-evaporation space (44) to the condenser (22).

9. Short path evaporator according to Claim 8, **characterized in that** the at least one further passage (50) is arranged in the prolongation of the condenser (22), and the partition (42) is rotatable about the longitudinal axis of the housing (4).

10. Method for separating a substance mixture in a short path evaporator (2) according to one of the preceding claims, comprising the steps that
a) the substance mixture is introduced into the short path evaporator (2) via the material feed (14),
b) the condensates of the individual condensation zones (22a, 22b, 22c, 22d) are collected in the respective collecting device (56) and are led away via the respective duct (58), and the lead-away condensates are discharged separately or combined with other condensates out of the short path evaporator (2), and
c) the non-condensed gaseous fraction of the substance mixture and the evaporation residue of the substance mixture are discharged out of the short path evaporator (2) separately.

## Revendications

1. Évaporateur à court trajet comprenant un boîtier (4) renfermant un espace intérieur (40) et doté d'une paroi de boîtier supérieure (6), d'une paroi de boîtier inférieure (8) et d'une enveloppe de boîtier (10) au moins en partie chauffable dont la surface intérieure ou une partie de celle-ci forme une surface d'évaporation (20), une entrée de matière (14) conduisant dans l'espace intérieur (40) et un condensateur (22) disposé dans l'espace intérieur (40), **caractérisé en ce que** le condensateur (22) comporte des zones de condensation (22a, 22b, 22c, 22d) disposées les unes au-dessus des autres, au niveau de l'extrémité inférieure desquelles un dispositif d'accumulation (56) est respectivement disposé en vue de réaliser l'accumulation du condensat de la zone de condensation respective, lesdits dispositifs d'accumulation (56) pouvant être déplacés en hauteur sur le condensateur (22) et un canal (58) ressortant de chacun des dispositifs d'accumulation (56) pour évacuer de façon séparée le condensat accumulé dans la zone de condensation concernée.

2. Évaporateur à court trajet selon la revendication 1, **caractérisé en ce qu'**au moins un des dispositifs d'accumulation (56) prend la forme d'une rigole.

3. Évaporateur à court trajet selon la revendication 1 ou 2, **caractérisé en ce qu'**au moins un des canaux (58) prend de préférence la forme d'un tube s'étendant de façon inclinée vers le bas.

4. Évaporateur à court trajet selon l'une quelconque des revendications précédentes, **caractérisé en ce qu'**au moins un des canaux (58) est relié à un passage (62) traversant le boîtier (4) en vue de réaliser l'évacuation séparée du condensat concerné hors de l'évaporateur à court trajet (2).

5. Évaporateur à court trajet selon la revendication 4, **caractérisé en ce que** l'au moins un canal relié au passage (62) ressort du dispositif d'accumulation (56a) supérieur.

6. Évaporateur à court trajet selon l'une quelconque des revendications précédentes, **caractérisé en ce qu'**au moins deux des canaux (58) débouchent dans une chambre (60) d'où un canal d'accumulation (63) ressort pour évacuer hors de l'évaporateur à court trajet (2) les condensats rassemblés à l'intérieur.

7. Évaporateur à court trajet selon l'une quelconque des revendications précédentes, **caractérisé en ce que** le condensateur (22) prend la forme de tubes de condensateur (22' , 22" ) disposés en arc de cercle autour de l'axe longitudinal du boîtier (4).

8. Évaporateur à court trajet selon l'une quelconque des revendications précédentes, **caractérisé en ce qu'**une paroi de séparation (42) est disposée entre l'entrée de matière (14) et le condensateur (22), ladite paroi séparant l'espace intérieur (40) en une chambre de prévaporisation (44) dans laquelle débouche l'entrée de matière (14) et une chambre de vaporisation/condensateur (46) renfermant le condensateur (22) et **en ce qu'**un premier passage traversant (48) est associé à la paroi de séparation (42) pour conduire la part fluide contenue dans la chambre de prévaporisation (44) vers la surface intérieure de l'enveloppe de boîtier (10) dans la chambre de vaporisation/condensateur (46) en vue de la vaporiser et que la paroi de séparation (42) comporte au moins un autre passage traversant (50) pour conduire jusqu'au condensateur (22) la part gazeuse contenue dans la chambre de prévaporisation (44) .

9. Évaporateur à court trajet selon la revendication 8, **caractérisé en ce que** l'au moins un autre passage traversant (50) est disposé dans le prolongement du condensateur (22) et que la paroi de séparation (42) peut tourner autour de l'axe longitudinal du boîtier (4).

10. Procédé de séparation d'un mélange de substances dans un évaporateur à court trajet (2) selon l'une quelconque des revendications précédentes, comprenant les étapes selon lesquelles :
a) le mélange de substances est introduit dans l'évaporateur à court trajet (2) par le biais de l'entrée de matière (14) ;
b) les condensats des différentes zones de condensation (22a, 22b, 22c, 22d) sont accumulés dans le dispositif d'accumulation (56) respectif et évacués par le biais du canal (58) respectif et les condensats évacués sont évacués hors de l'évaporateur à court trajet (2) séparément ou conjointement avec d'autres condensats ;
c) la part gazeuse non condensée du mélange de substances ainsi que le résidu d'évaporation du mélange de substances sont évacués séparément hors de l'évaporateur à court trajet (2).
